# EUROPÄISCHE PATENTSCHRIFT

(11) **EP 1 923 820 B1**
(45) Veröffentlichungstag und Bekanntmachung des Hinweises auf die Patenterteilung: **06.01.2010**
(21) Anmeldenummer: 07020086.0
(22) Anmeldetag: 13.10.2007
(51) Int. Cl.: G06K 7/10

(54) **Barcodelesegerät**
Bar code reader
Appareil de lecture d'un code à barres

(30) Priorität: 18.11.2006 DE 102006054491
(43) Veröffentlichungstag der Anmeldung: 21.05.2008
(73) Patentinhaber: Leuze electronic GmbH + Co. KG, 73277 Owen/Teck (DE)
(72) Erfinder: Claus, Armin, 72622 Nürtingen (DE)
(74) Vertreter: Ruckh, Rainer Gerhard

(56) Entgegenhaltungen:
- DE-A1- 3 128 350
- FR-A- 2 782 394

## Beschreibung

Die Erfindung betrifft ein Barcodelesegerät gemäß dem Oberbegriff des Anspruchs 1.

Derartige Barcodelesegeräte dienen zur Erfassung von Barcodes oder generell von Kontrastmustern aufweisenden Marken. Zur Detektion dieser Barcodes weisen Barcodelesegeräte im einfachsten Fall einen Sendelichtstrahlen emittierenden Sender, einen Empfangslichtstrahlen empfangenden Empfänger sowie eine Ablenkeinheit, mittels derer die Sendelichtstrahlen periodisch innerhalb eines Abtastbereichs geführt werden, auf Weiterhin weist das Barcodelesegerät eine Auswerteeinheit auf, in welcher die Empfangssignale des Empfängers zur Dekodierung des jeweiligen Barcodes ausgewertet werden.

Die Ablenkeinheit des Barcodelesegeräts besteht typischerweise aus einem Polygonspiegelrad, welches an seinen Seitenwänden eine vorgegebene Anzahl von identischen Spiegelflächen aufweist. Das Polygonspiegelrad wird mittels eines Motors angetrieben und führt somit eine Drehbewegung um eine Drehachse aus. Durch diese Drehbewegung werden die an den Spiegelflächen reflektierten Sendelichtstrahlen innerhalb einer Ebene geführt, die den Abtastbereich bildet, das heißt die Sendelichtstrahlen bilden eine in der Ebene verlaufende Abtastlinie.

Zur Vergrößerung des Erfassungsbereichs innerhalb dessen Barcodes erfassbar sind, wird bei bekannten Barcodelesegeräten zusätzlich zum Polygonspiegelrad als erster Ablenkeinheit als zweite, nachgeordnete Ablenkeinheit ein Schwenkspiegel eingesetzt. Durch diese zusätzliche Ablenkeinheit wird als Strahlmuster der Sendelichtstrahlen nicht nur eine in der Ebene verlaufende Abtastlinie erhalten, sondern ein zweidimensionales Raster von übereinanderliegenden Abtastlinien. Hierzu wird der Schwenkspiegel bezüglich einer Schwenkachse periodisch innerhalb eines Drehwinkelbereichs gedreht, wobei der Drehwinkelbereich nur einen Bruchteil einer Vollumdrehung umfasst. Typischerweise beträgt der Drehwinkelbereich etwa 20°. Die Schwenkbewegung des Schwenkspiegels erfolgt dabei erheblich langsamer als die Drehbewegung des Polygonspiegelrads.

Zur Erzeugung der Schwenkbewegung des Schwenkspiegels könnte dieser direkt auf die Welle eines Antriebs aufgesetzt werden, der typischerweise von einem Schrittmotor gebildet ist.

Nachteilig hierbei ist, dass durch diese direkte Ankopplung des Schwenkspiegels an die Welle des Antriebs nur ein den Drehwinkelbereich des Schwenkspiegels entsprechender Teilbereich der Vollumdrehung der Welle des Antriebs ausgenützt wird. Abgesehen davon, dass durch diese Ankopplung des Schwenkspiegels an den Antrieb zu große Abstände zwischen den einzelnen Abtastlinien erhalten werden, besteht ein weiterer wesentlicher Nachteil dieser Anordnung darin, dass Unregelmäßigkeiten in der Bewegung des Antriebs unmittelbar auf die Bewegung des Schwenkspiegels übertragen werden, wodurch sich eine unerwünschte Verzerrung der Abtastlinien ergibt.

Bei einem als Schnittmotor ausgebildeten Antrieb kann die jeweilige Drehung der Welle nur in diskreten Einzelschritten durchgeführt werden. Diese diskreten Schritte der Drehung der Welle werden auf den Schwenkspiegel übertragen, wodurch erhebliche Verzerrungen der Abtastlinien auftreten.

Ein Barcodelesegerät mit den Merkmalen des Oberbegriffs des Anspruchs 1 ist aus der FR-A-2 782 394 bekannt. Das dort beschriebene Barcodelesegerät weist als erste Ablenkeinheit für Sendelichtstrahlen ein rotierendes Polygonspiegelrad und als zweite Ablenkeinheit einen Schwenkspiegel auf. Beide Ablenkeinheiten sind räumlich voneinander getrennt.

Die DE 31 28 350 A1 betrifft ein optisches Abtastsystem, bei welchem die Drehbewegung eines rotierenden Abtastelements für eine Horizontalabtastung auf einen Schwingspiegel für eine Vertikalabtastung mittels eines an einer Kurvenscheibe federnd anliegenden Abgriffsglieds übertragen wird.

Der Erfindung liegt die Aufgabe zugrunde ein Barcodelesegerät der eingangs genannten Art bereitzustellen, bei welchem mit möglichst geringem konstruktivem Aufwand ein reproduzierbares und exaktes Muster von Abtastlinien zur Abtastung von Barcodes erhalten wird.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Das erfindungsgemäße Barcodelesegerät umfasst einen Sendelichtstrahlen emittierenden Sender, einen Empfangslichtstrahlen empfangenden Empfänger und eine erste Ablenkeinheit in Form eines motorisch angetriebenen Polygonspiegelrads, mittels derer die Sendelichtstrahlen periodisch in einer Ebene abgelenkt werden. Mit einer zweiten Ablenkeinheit in Form eines mittels eines Antriebs angetriebenen Schwenkspiegels werden die Sendelichtstrahlen aus der Ebene heraus abgelenkt. Zur Ankopplung des Schwenkspiegels an den Antrieb ist eine Kurvenscheibe vorgesehen.

Erfindungsgemäß weist die auf der Welle des Antriebs aufsitzende Kurvenscheibe eine spiralförmige Rillenstruktur auf. In dieser Rillenstruktur ist ein Mitnehmer geführt, der mit einem eine Drehlagerung für den Schwenkspiegel bildenden Träger verbunden ist. Dabei weist der Mitnehmer insbesondere ein Kugellager auf, welches mit geringem Spiel in den Rillen der Kurvenscheibe geführt ist. Diese Führung des Kugellagers ist unempfindlich gegen Störeinflüsse und gewährleistet eine sichere Ankopplung des Mitnehmers an die Kurvenscheibe. Durch die Ausbildung der Rillenstruktur der Kurvenscheibe kann das Übersetzungsverhältnis in einfacher Weise exakt vorgegeben werden.

Dies ermöglicht eine exakte Vorgabe des zweidimensionalen Musters von übereinanderliegenden Abtastlinien, die durch die Umlenkung der Sendelichtstrahlen über das Polygonspiegelrad als erster Ablenkeinheit und den Schwenkspiegel als zweiter Ablenkeinheit erhalten werden.

Ein wesentlicher Vorteil der Erfindung besteht dabei darin, dass durch die Kurvenscheibe der Drehwinkelbereich des Schwenkspiegels, der nur einen Bruchteil einer Vollumdrehung beträgt, auf einen Winkelbereich der Welle des Antriebs abgebildet werden kann, der eine ganze Vollumdrehung oder sogar mehr als eine Vollumdrehung beträgt. Dadurch kann die Schwenkbewegung des Schwenkspiegels über den Antrieb exakt vorgegeben werden. Hierdurch wird eine fehlerfreie Generierung von Abtastlinien ermöglicht, wobei insbesondere auch die Abstände zwischen den einzelnen Abtastlinien in gewünschter Weise vorgeben werden können.

Als Antrieb für den Schwenkspiegel wird bevorzugt ein Schrittmotor eingesetzt. Die Drehwinkel des Schrittmotors können zwar nur in diskreten Winkelschritten vorgegeben werden. Diese führen jedoch nicht zu Unregelmäßigkeiten in den Abtastlinien. Dies beruht auf dem durch die Kurvenscheibe vorgegebenem großen Übersetzungsverhältnis. Dementsprechend führt eine große antriebsseitige Drehwinkeländerung der Welle nur zu einer sehr kleinen Drehwinkeländerung der Schwenkachse des Schwenkspiegels.

Die Erfindung wird im Nachstehenden anhand der Zeichnungen erläutert. Es zeigen:
- Figur 1:: Schematische Darstellung eines Barcodelesegeräts.
- Figur 2:: Detaildarstellung einer Schwenkspiegel-Anordnung für das Barcodelesegerät gemäß Figur 1.

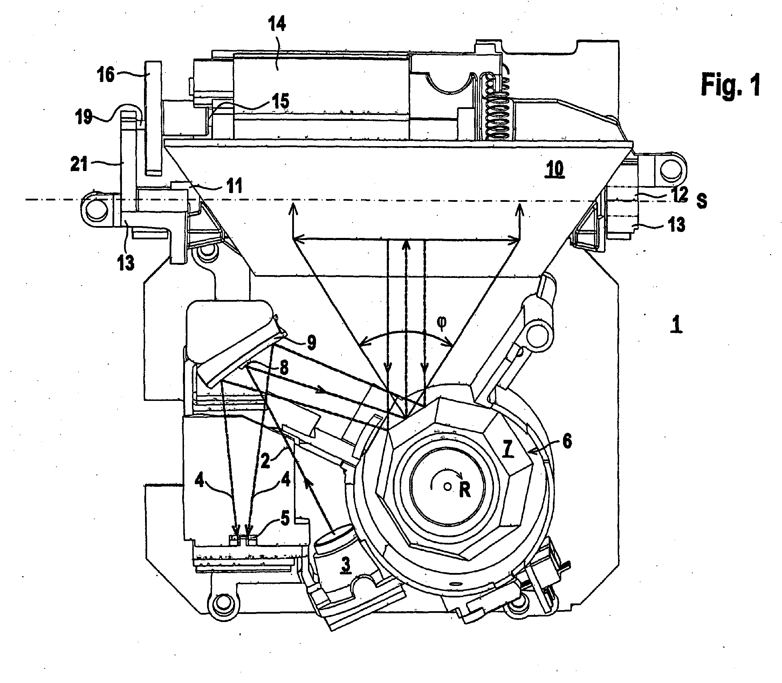

Figur 1 zeigt ein Ausführungsbeispiel eines Barcodelesegeräts 1 zur Erfassung von Barcodes oder generell Kontrastmustern aufweisenden Marken.

Das Barcodelesegerät 1 gemäß Figur 1 weist einen Sendelichtstrahlen 2 emittierenden Sender 3 und einen Empfangslichtstrahlen 4 empfangenden Empfänger 5 auf. Der Sender 3 ist von einer Laserdiode gebildet, der Empfänger 5 besteht aus einer Fotodiode oder dergleichen.

Der Sender 3 und der Empfänger 5 sind an eine nicht dargestellte Auswerteeinheit angeschlossen. Die Auswerteeinheit dient zur Ansteuerung des Senders 3. Weiterhin erfolgt in der Auswerteeinheit zur Erfassung der Kontrastmuster der Barcodes eine Auswertung der am Ausgang des Empfängers 5 anstehenden Empfangssignale.

Das Barcodelesegerät 1 weist weiterhin eine erste Ablenkeinheit in Form eines motorisch getriebenen Polygonspiegelrads 6 auf. Die Drehrichtung des Polygonspiegelrads 6 ist in Figur 1 mit einem mit R gekennzeichneten Pfeil dargestellt. Die Drehachse des Polygonspiegelrads 6 verläuft nahezu senkrecht zur Zeichenebene in Figur 1. Das Polygonspiegelrad 6 weist mehrere identische Spiegelflächen 7 auf, wobei im vorliegenden Fall acht Spiegelflächen 7 vorgesehen sind.

Die Sendelichtstrahlen 2 und die Empfangslichtstrahlen 4 werden jeweils über dieselbe Spiegelfläche 7 des Polygonspiegelrads 6 geführt. Dabei verlaufen die Strahlachsen der auf das Polygonspiegelrad 6 auftreffenden Sendelichtstrahlen 2 und Empfangslichtstrahlen 4 koaxial zueinander. Die koaxiale Strahlführung wird durch Umlenkung der Sendelichtstrahlen 2 beziehungsweise Empfangslichtstrahlen 4 an einem Umlenkspiegel 8 beziehungsweise einem Hohlspiegel 9 erhalten. Der Umlenkspiegel 8 ist auf dem Hohlspiegel 9 in dessen Zentrum befestigt. Die vom Sender 3 emittierten Sendelichtstrahlen 2 werden über den Umlenkspiegel 8 umgelenkt und auf eine Spiegelfläche 7 des Polygonspiegelrads 6 geführt. Von dort gelangen die Sendelichtstrahlen 2 in einen Erfassungsbereich zur Detektion des Barcodes. Aus dem Erfassungsbereich zurück reflektierte Empfangslichtstrahlen 4 gelangen auf dieselben Spiegelflächen 7 und werden von dort in Richtung des Hohlspiegels 9 geführt. Durch die Reflexion der Empfangslichtstrahlen 4 am Hohlspiegel 9 werden diese auf den Empfänger 5 geführt. Da der Hohlspiegel 9 fokussierend wirkt, ist keine weitere Optik zur Fokussierung der Empfangslichtstrahlen 4 notwendig.

Durch die Drehbewegung des Polygonspiegelrads 6 werden die Sendelichtstrahlen 2 periodisch innerhalb eines Winkelbereichs ϕ abgelenkt, wobei die Sendelichtstrahlen 2 innerhalb einer in der Zeichenebene von Figur 1 liegenden Ebene geführt sind. Die Größe des Winkelbereichs ist durch die Anzahl der Spiegelflächen 7 des Polygonspiegelrads 6 bestimmt.

Als zweite, der ersten Ablenkeinheit im Strahlengang der Sendelichtstrahlen 2 nachgeordnete Ablenkeinheit ist ein um eine Schwenkachse S schwenkbarer Schwenkspiegel 10 vorgesehen.

Die Schwenkachse S liegt in der Ebene, in welcher die Sendelichtstrahlen 2 durch die Ablenkung am Polygonspiegelrad 6 geführt werden. Der Schwenkspiegel 10 wird periodisch innerhalb eines vorgegebenen Drehwinkelbereichs geschwenkt. Generell können auch einzelne nicht periodische Schwenkbewegungen durchgeführt werden. Im vorliegenden Fall wird der Schwenkspiegel 10 bezügllich einer Grundstellung um ± 10° geschwenkt, das heißt der Drehwinkelbereich beträgt 20°.

Die Schwenkbewegung des Schwenkspiegels 10 erfolgt erheblich langsamer als die Drehbewegung des Polygonspiegelrads 6. Während die Scanrate des Polygonspiegelrads 6 typischerweise in der Größenordnung von 1000 Hz liegt, liegt die Oszillationsfrequenz des Schwenkspiegels 10 typischerweise im Bereich von 0,1 Hz bis 20 Hz. Dabei ist die Scanrate durch das Produkt der Drehzahl des Polygonspiegelrads und der Anzahl der Spiegelflächen des Polygonspiegelrads definiert.

Durch die zusätzliche Ablenkung der Sendelichtstrahlen 2 am Schwenkspiegel 10 werden die Sendelichtstrahlen 2 nicht nur entlang der in der Ebene verlaufenden Abtastlinie geführt. Vielmehr wird ein zweidimensionales Abtastmuster in Form von mehreren übereinander liegender Abtastlinien erhalten.

Durch die periodische Abtastung eines Barcodes mit den entlang der Abtastlinien geführten Sendelichtstrahlen 2 wird den am Barcode reflektierten Sendelichtstrahlen 2, welche als Empfangslichtstrahlen 4 zum Empfänger 5 geführt sind, entsprechend dem Kontrastmuster des jeweiligen Barcodes eine Amplitudenmodulation aufgeprägt. Entsprechend weisen auch die Empfangssignale am Ausgang des Empfängers 5 eine entsprechende Amplitudenmodulation auf. Diese wird in der Auswerteeinheit zur Dekodierung des Barcodes ausgewertet.

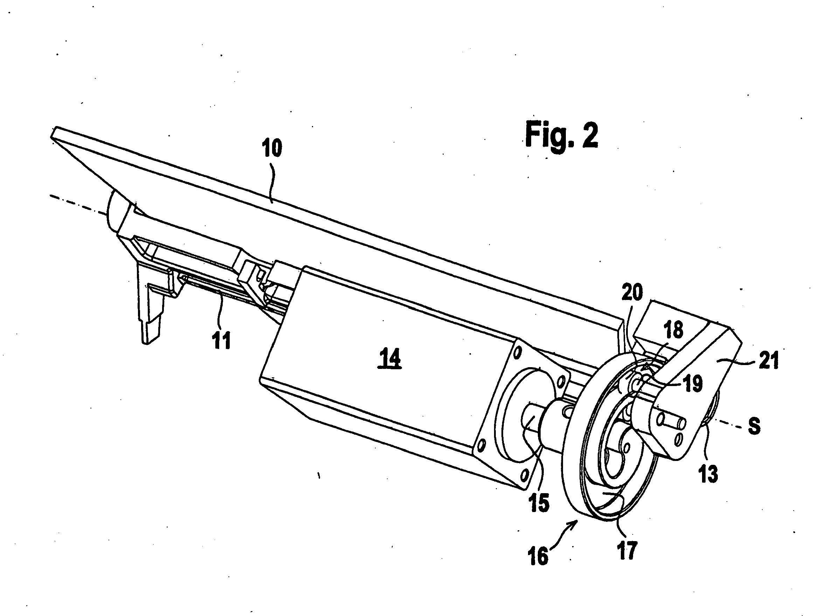

Die Halterung des Schwenkspiegels 10 sowie deren Antrieb sind in Figur 2 in einer Einzeldarstellung dargestellt.

Der Schwenkspiegel 10 weist eine trapezförmige ebene spiegelnde Oberfläche auf, an welcher die Sendelichtstrahlen 2 reflektiert werden. Der Schwenkspiegel 10 ist auf einem Träger 11 montiert, wobei an dessen längsseitigen Enden Wellensegmente 12 vorgesehen sind, die in Lagern 13 drehbar gelagert sind, so dass der Träger 11 mit dem Schwenkspiegel 10 bezüglich der Schwenkachse S schwenkbar ist.

Als Antrieb für den Schwenkspiegel 10 ist ein Schrittmotor 14 vorgesehen. Alternativ kann der Antrieb von einem Voicecoil-Motor gebildet sein. Aus dem Schrittmotor 14 ist eine Welle 15 geführt, auf welcher eine Kurvenscheibe 16 fest aufsitzt. Durch den Schrittmotor 14 wird die Welle 15 um ihre Symmetrieachse gedreht und damit auch die Kurvenscheibe 16 in eine Drehbewegung versetzt. Die Kurvenscheibe 16 weist eine Rillenstruktur in Form einer spiralförmig verlaufenden Rille 17 auf, die an der dem Schrittmotor 14 abgewandten Stirnseite die Kurvenscheibe 16 frei liegt.

Zur Ankopplung des Schwenkspiegels 10 an den Schrittmotor 14 ist ein Mitnehmer 18 vorgesehen, der mit dem Träger 11 starr verbunden ist. Der Mitnehmer 18 besteht im Wesentlichen aus einem Stift 19, an dessen Ende ein Kugellager 20 vorgesehen ist, welches in der Rillenstruktur der Kurvenscheibe 16 läuft. Der Mitnehmer 18 ist über einen Arm 21 fest mit dem Grundkörper des Trägers 11 verbunden.

Die Breite der spiralförmigen Rille 17 der Kurvenscheibe 16 ist über ihre gesamte Länge konstant und an den Durchmesser des Kugellagers 20 angepasst, so dass diese mit geringem Spiel in der Rillenstruktur geführt ist.

Die Kurvenscheibe 16 bildet ein Übertragungselement, bei welchem durch die Ausbildung der Rillenstruktur das Übersetzungsverhältnis des Drehwinkels der Welle 15 des Schrittmotors 14 zum Schwenkwinkel des Schwenkspiegels 10 vorgebbar ist.

Durch die spiralförmige Rillenstruktur wird ein Übersetzungsverhältnis erhalten, das erheblich größer als eins ist, das heißt eine Drehung der Welle 15 um einen bestimmten Drehwinkel bewirkt ein Schwenken des Schwenkspiegels 10 um einen Schwenkwinkel, der erheblich kleiner ist als eine Vollumdrehung.

Im vorliegenden Fall weist die Kurvenscheibe 16 eine Rillenstruktur mit mehr als einer ganzen Umdrehung auf. Damit wird der Schwenkwinkelbereich des Schwenkspiegels 10, der im vorliegenden Fall ± 10°, das heißt insgesamt 20° beträgt, auf mehr als eine Vollumdrehung der Welle 15 und des Schrittmotors 14 abgebildet.

Durch dieses Übersetzungsverhältnis ist eine genaue gleichförmige Vorgabe des zeitlichen Verlaufs der Schwenkbewegung des Schwenkspiegels 10 ermöglicht, wodurch ein verzerrungsfreies zweidimensionales Muster von Abtastlinien generiert wird.

### Bezugszeichenliste

- (1): Barcodelesegerät
- (2): Sendelichtstrahlen
- (3): Sender
- (4): Empfangslichtstrahlen
- (5): Empfänger
- (6): Polygonspiegelrad
- (7): Spiegelflächen
- (8): Umlenkspiegel
- (9): Hohlspiegel
- (10): Schwenkspiegel
- (11): Träger
- (12): Wellensegment
- (13): Lager
- (14): Schrittmotor
- (15): Welle
- (16): Kurvenscheibe
- (17): Rille
- (18): Mitnehmer
- (19): Stift
- (20): Kugellager
- (21): Arm

## Patentansprüche

1. Barcodelesegerät mit einem Sendelichtstrahlen emittierenden Sender, einem Empfangslichtstrahlen empfangenden Empfänger, einer ersten Ablenkeinheit in Form eines motorisch angetriebenen Polygonspiegelrads, mittels derer die Sendelichtstrahlen periodisch in einer Ebene abgelenkt werden, und mit einer zweiten Ablenkeinheit in Form eines mittels eines Antriebs angetriebenen Schwenkspiegels, durch welchen die Sendelichtstrahlen aus der Ebene heraus abgelenkt werden, **dadurch gekennzeichnet, dass** zur Ankopplung des Schwenkspiegels (10) an den Antrieb eine Kurvenscheibe (16) vorgesehen ist, welche eine spiralförmige Rillenanordnung aufweist, wobei ein mit dem Schwenkspiegel (10) verbundener Mitnehmer (18) in den Rillen (17) der Kurvenscheibe (16) geführt ist.

2. Barcodelesegerät nach Anspruch 1, **dadurch gekennzeichnet, dass** die Kurvenscheibe (16) auf dem freien Ende einer Welle (15) aufsitzt, welche aus dem Antrieb herausgeführt ist.

3. Barcodelesegerät nach Anspruch 2, **dadurch gekennzeichnet, dass** der Antrieb von einem Schrittmotor (14) oder einem Voicecoil-Motor gebildet ist.

4. Barcodelesegerät nach einem der Ansprüche 1 bis 3, **dadurch gekennzeichnet, dass** der Schwenkspiegel (10) auf einem um eine Schwenkachse drehbar gelagerten Träger (11) befestigt ist, mit welchem der Mitnehmer (18) verbunden ist.

5. Barcodelesegerät nach Anspruch 4, **dadurch gekennzeichnet, dass** die Schwenkachse in der Ebene liegt, in welcher die Sendelichtstrahlen (2) durch das Polygonspiegelrad (6) geführt sind.

6. Barcodelesegerät nach einem der Ansprüche 1 bis 5, **dadurch gekennzeichnet, dass** der Mitnehmer (18) zur Führung in den Rillen (17) der Kurvenscheibe (16) ein Kugellager (20) aufweist.

7. Barcodelesegerät nach Anspruch 7, **dadurch gekennzeichnet, dass** die Breite der Rillen (17) an den Außendurchmesser des Kugellagers (20) angepasst ist, so dass das Kugellager (20) mit geringem Spiel in den Rillen (17) geführt ist.

8. Barcodelesegerät nach einem der Ansprüche 1 bis 7, **dadurch gekennzeichnet, dass** durch die Ausbildung der Rillenanordnung das Übersetzungsverhältnis des Drehwinkels der Welle (15) des Antriebs zum Drehwinkel des Schwenkspiegels (10) vorgebbar ist.

9. Barcodelesegerät nach Anspruch 8, **dadurch gekennzeichnet, dass** das Übersetzungsverhältnis größer als eins ist.

10. Barcodelesegerät nach einem der Ansprüche 8 oder 9, **dadurch gekennzeichnet, dass** der Drehwinkelbereich des Schwenkspiegels (10) einen Bruchteil einer Vollumdrehung umfasst.

11. Barcodelesegerät nach Anspruch 10, **dadurch gekennzeichnet, dass** durch die Ausbildung der Rillenstruktur der Kurvenscheibe (16) der Drehwinkelbereich des Schwenkspiegels (10) auf wenigstens eine Vollumdrehung der Welle (15) des Antriebs abgebildet wird.

## Claims

1. Barcode reader with a transmitter emitting transmitted light beams, a receiver receiving received light beams, a first deflecting unit in the form of a motor-driven polygon mirror wheel by means of which the transmitted light beams are periodically deflected into a plane, and a second deflecting unit in the form of a pivot mirror which is driven by means of a drive and by which the transmitted light beams are deflected out of the plane, **characterised in that** provided for coupling of the pivot mirror (10) to the drive is a cam disc (16) having a spiral groove arrangement, wherein an entrainer (18) connected with the pivot mirror (10) is guided in the grooves (17) of the cam disc (16).

2. Barcode reader according to claim 1, **characterised in that** the cam disc (16) is seated on the free end of a shaft (15) which is led out of the drive.

3. Barcode reader according to claim 2, **characterised in that** the drive is formed by a step motor (14) or a voice coil motor.

4. Barcode reader according to any one of claims 1 to 3, **characterised in that** the pivot mirror (10) is fastened on a carrier (11) which is mounted to be rotatable about a pivot axis and with which the entrainer (18) is connected.

5. Barcode reader according to claim 4, **characterised in that** the pivot axis lies in the plane in which the transmitted light beams (2) are led through the polygon mirror wheel (6).

6. Barcode reader according to any one of claims 1 to 5, **characterised in that** the entrainer (18) has a ball bearing (20) for guidance in the grooves (17) of the cam disc (16).

7. Barcode reader according to claim 6, **characterised in that** the width of the grooves (17) is matched to the outer diameter of the ball bearing (20) so that the ball bearing (20) is guided in the grooves (17) with a small amount of play.

8. Barcode reader according to any one of claims 1 to 7, **characterised in that** the translation ratio of the rotational angle of the shaft (15) of the drive to the rotational angle of the pivot mirror (10) is presettable by the construction of the groove arrangement.

9. Barcode reader according to claim 8, **characterised in that** the translation ratio is greater than one.

10. Barcode reader according to one of claims 8 and 9, **characterised in that** the rotational angle range of the pivot mirror (10) comprises a fraction of a full revolution.

11. Barcode reader according to claim 10, **characterised in that** the rotational angular range of the pivot mirror (10) on at least one full revolution of the shaft (15) of the drive is reproduced by the construction of the groove structure of the cam disc (16).

## Revendications

1. Appareil de lecture de codes à barres comprenant un émetteur émettant des rayons lumineux d'émission, un récepteur recevant des rayons lumineux de réception, une première unité de déviation sous la forme d'une roue à miroir polygonal entraînée par moteur au moyen de laquelle les rayons lumineux d'émission sont déviés périodiquement dans un plan, et une deuxième unité de déviation sous la forme d'un miroir pivotant entraîné au moyen d'un entraînement, par lequel les rayons lumineux d'émission sont déviés à partir du plan, **caractérisé en ce que**, pour coupler le miroir pivotant (10) à l'entraînement, il est prévu une came (16) qui présente un agencement de gorges en spirale, un toc d'entraînement (18) relié au miroir pivotant (10) étant guidé dans les gorges (17) de la came (16).

2. Appareil de lecture de codes à barres selon la revendication 1, **caractérisé en ce que** la came (16) est montée sur l'extrémité libre d'un arbre (15) qui sort de l'entraînement.

3. Appareil de lecture de codes à barres selon la revendication 2, **caractérisé en ce que** l'entraînement est formé par un moteur pas à pas (14) ou un moteur voice coil.

4. Appareil de lecture de codes à barres selon une des revendications 1 à 3, **caractérisé en ce que** le miroir pivotant (10) est fixé sur un support (11) qui est monté tournant autour d'un axe de pivotement et auquel est relié le toc d'entraînement (18).

5. Appareil de lecture de codes à barres selon la revendication 4, **caractérisé en ce que** l'axe de pivotement est situé dans le plan dans lequel les rayons lumineux d'émission (2) sont guidés par la roue à miroir polygonal (6).

6. Appareil de lecture de codes à barres selon une des revendications 1 à 5, **caractérisé en ce que** le toc d'entraînement (18) présente un roulement à billes (20) pour le guidage dans les gorges (17) de la came (16).

7. Appareil de lecture de codes à barres selon la revendication 7, **caractérisé en ce que** la largeur des gorges (17) est adaptée au diamètre extérieur du roulement à billes (20) de manière que le roulement à billes (20) soit guidé dans les gorges (17) avec un faible jeu.

8. Appareil de lecture de codes à barres selon une des revendications 1 à 7, **caractérisé en ce que** le rapport de démultiplication entre l'angle de rotation de l'arbre (15) de l'entraînement et l'angle de rotation du miroir pivotant (10) peut être prédéfini par la conformation de l'agencement de gorges.

9. Appareil de lecture de codes à barres selon la revendication 8, **caractérisé en ce que** le rapport de démultiplication est supérieur à un.

10. Appareil de lecture de codes à barres selon une des revendications 8 ou 9, **caractérisé en ce que** la plage d'angle de rotation du miroir pivotant (10) comprend une fraction d'un tour complet.

11. Appareil de lecture de codes à barres selon la revendication 10, **caractérisé en ce que** la plage d'angle de rotation du miroir pivotant (10) est reproduite sur au moins un tour complet de l'arbre (15) de l'entraînement par la conformation de la structure des gorges de la came (16).
